# EUROPÄISCHE PATENTSCHRIFT

(11) **EP 0 885 757 B1**
(45) Veröffentlichungstag und Bekanntmachung des Hinweises auf die Patenterteilung: **23.03.2005**
(21) Anmeldenummer: 98110979.6
(22) Anmeldetag: 16.06.1998
(51) Int. Cl.: B60G 13/00, F16F 1/38

(54) **Einrichtung zur elastischen Verbindung wenigstens zweier Bauteile**
Device for resiliently joining two parts
Dispositif pour la liaison élastique de deux pièces

(30) Priorität: 18.06.1997 DE 19725826
(43) Veröffentlichungstag der Anmeldung: 23.12.1998
(73) Patentinhaber: BASF AKTIENGESELLSCHAFT, 67056 Ludwigshafen (DE)
(72) Erfinder: Burlage, Thomas, 49134 Wallenhorst (DE); Giesen, Klaus, 49401 Damme (DE)
(74) Vertreter: Isenbruck, Günter, Dr.

(56) Entgegenhaltungen:
- DE-A- 4 026 645
- DE-A- 4 326 197
- US-A- 4 175 771
- US-A- 4 465 296
- US-A- 5 362 035
- US-A- 5 551 661

## Beschreibung

Der Gegenstand der Erfindung betrifft eine Einrichtung zur elastischen Verbindung wenigstens zweier Bauteile, insbesondere eines Stoßdämpfers mit einer Struktur eines Fahrzeugs, mit einem in einem Gehäuse angeordneten elastischen Element.

Zur Vermeidung von Übertragung von Schwingungen eines ersten Bauteils auf ein zweites Bauteil ist bekannt, die beiden Bauteile mittels eines schwingungsdämpfenden Elementes zu verbinden. Bei einem solchen schwingungsdämpfenden Element kann es sich beispielsweise um einen Stoßdämpfer handeln. Ein Stoßdämpfer wandelt Schwingungsenergie in Wärme um und bringt damit Schwingungen zum Abklingen. Stoßdämpfer werden insbesondere bei Kraftfahrzeugen verwendet. Solche Stoßdämpfer haben einen wesentlichen Einfluß auf das Schwingungsverhalten von Achsen und Fahrzeugstruktur, insbesondere eine Karosserie, eines Kraftfahrzeugs. Das schwingungsdämpfende Element, wird hierzu mit der Struktur eines Fahrzeugs verbunden. Die Verbindung zwischen dem Stoßdämpfer und der Struktur des Kraftfahrzeugs sollte so ausgestaltet werden, daß über den Stoßdämpfer selbst keine Schwingungen in die Struktur übertragen werden. Zur Vermeidung einer solchen Übertragung ist es bekannt, den Stoßdämpfer mit der Struktur des Fahrzeugs elastisch zu verbinden.

Es sind verschiedene Ausführungsformen einer elastischen Befestigung eines Stoßdämpfers, insbesondere der Kolbenstange des Stoßdämpfers, mit einer Struktur eines Kraftfahrzeugs bekannt. Solche Ausführungsformen sind durch die DE 43 19 689 A1 bekannt. Für die Befestigung schlägt die DE 43 19 689 A1 eine Einrichtung vor, die ein elastisches Element aufweist, das in einem Gehäuse angeordnet ist. Durch das elastische Element erstreckt sich eine Kolbenstange eines Stoßdämpfers. Das Gehäuse für das elastische Element ist napfförmig ausgebildet. Das elastische Element erfährt bereits im Rahmen der Montage eine Vorspannung. Da die elastomeren Werkstoffe, aus denen ein solches Element bestehen kann, durch diese Vorspannung bereits in einen progressiven Bereich ihrer Kraft-Verformungskennlinie kommen, ist eine solche Befestigung weniger weich als bei Verwendung nicht vorgespannter Stützelemente.

DE 43 26 197 A1 bezieht sich auf eine Aufhängungslagerung, die ein äußeres Bauelement mit einem ersten und einem zweiten Bauteil enthält. Die Bauteile sind miteinander verbunden und haben einen Einbauinnenraum, in dem ein inneres Bauelement angeordnet ist. Zwischen dem äußeren und dem inneren Bauelement befindet sich ein gummielastischer Körper. Das innere Bauelement weist einen feststehenden Körper aus Metall und zwei hervorstehende Abschnitte aus Harz auf. Der gummielastische Körper hat vor dem Einsetzen gewölbte hervorstehende Abschnitte, die zum Zusammendrücken beim Einsetzen dienen.

US 4,175,771 befasst sich mit Radaufhängungen für Fahrzeuge, die aus einem Teleskopkolben-Stoßdämpfer, einer Schraubenfeder und einer Aufnahme für das obere Ende der Kolbenstange bestehen. Die Aufnahme ist ein Ring aus elastomerem Werkstoff, der zwischen zwei Halterungen vorgespannt ist.

DE 40 26 645 A1 betrifft ein Abstützlager zur elastischen Abstützung insbesondere eines Stoßdämpfers. Innerhalb eines Lagergehäuses ist ein Elastomerkörper vorgesehen, der einen Lagerkern spielfrei aufnimmt. Die Bewegungen dieses Lagerkerns sind durch gehäusefeste Anschläge begrenzt. Der Elastomerkörper ist im Lagergehäuse in Abstützrichtung vorgespannt und berührt die Anschläge nicht. Der Lagerkern wird von dem Elastomerkörper allseitig umschlossen und ist an der einen Stirnseite eben ausgebildet. Das Lagergehäuse besteht aus zwei Gehäusehälften mit konischen Wandteilen, zwischen denen der Elastomerkörper eingespannt ist.

Ziel der vorliegenden Erfindung ist es, die Nachteile des Standes der Technik zu vermeiden und eine Einrichtung zur elastischen Verbindung wenigstens zweier Bauteile, insbesondere eines Stoßdämpfers mit einer Struktur eines Fahrzeugs, anzugeben, durch die die elastische Verbindung zunächst weich ist und sich bei höherer Belastung verhärtet.

Dieses Ziel wird durch eine Einrichtung zur elastischen Verbindung wenigstens zweier Bauteile mit den Merkmalen des Anspruchs 1 erreicht. Vorteilhafte Weiterbildungen der Einrichtung sind Gegenstand der Unteransprüche.

Die erfindungsgemäße Einrichtung zur elastischen Verbindung wenigstens zweier Bauteile zeichnet sich durch ein erstes Verbindungsteil, das mit dem elastischen Element verbunden und im wesentlichen koaxial zu einer Gehäuseöffnung angeordnet ist. Das elastische Element kann aus einem Elastomer, insbesondere aus einem zelligen Polyurethan-Elastomer, bestehen. Das Verbindungsteil dient zur Verbindung beispielsweise mit einer Kolbenstange eines Stoßdämpfers. Zur Verbindung der Einrichtung mit einem zweiten Bauteil ist ein zweites Verbindungsteil, das mit dem Gehäuse verbunden ist, vorgesehen. Dieses zweite Verbindungsteil dient beispielsweise zur Festlegung der Einrichtung an einer Struktur eines Fahrzeugs. Die Einrichtung ist so ausgebildet, daß das elastische Element wenigstens einen mindestens in der Nähe des ersten Verbindungsteils liegenden Bereich, einen vorspannungsfreien Bereich, aufweist, der gegenüber wenigstens einem weiteren Bereich, einem Vorspannbereich, des Elementes keine oder eine wesentlich geringere Vorspannung aufweist. Dieser weitere Bereich bildet einen Vorspannungsbereich des Elementes.

Durch diese Ausgestaltung der Einrichtung wird erreicht, daß die Einrichtung zunächst einen relativ weichen Federungsbereich hat, der sich bei höherer Belastung progressiv verhärtet. Im konkreten wird beispielsweise durch die Bewegung einer mit dem ersten Verbindungsteil verbundenen Kolbenstange eines Stoßdämpfers das elastische Element in seinem vorspannungsfreien Bereich gestaucht. Das Element hat eine gewünschte anfängliche Weichheit. Die bei erhöhter Belastung gewünschte progressive Verhärtung des Elementes ergibt sich aus der geeigneten Wahl des elastomeren Werkstoffes, aus dem das Element besteht.

Ferner weist das Element bei der vorliegenden Erfindung in wenigstens einer Stirnfläche wenigstens eine zwischen dem Vorspannungsbereich und dem im wesentlichen vorspannungsfreien Bereich liegende Nut auf, in die sich wenigstens ein in dem Gehäuse verbundener Vorsprung hinein erstreckt. Hierdurch wird erreicht, daß das Element im wesentlichen unverrückbar fest im Gehäuse angeordnet wird. Innerhalb der umlaufenden Nut ist das Element nach der Montage im wesentlichen nicht gestaucht. Das Element weist im Bereich der Nut keine oder nur eine sehr geringe Vorspannung auf. Das Maß der Vorspannung, die im Bereich der Nut vorhanden sein kann, ist im wesentlichen abhängig von der Dimensionierung des Elementes, der Nut sowie des in die Nut sich hineinerstreckenden Vorsprungs. Zur Ausbildung des Vorspannbereichs des Elementes wird vorgeschlagen, daß das Element im vorspannungsfreien Zustand des Vorspannbereichs eine Höhe aufweist, die größer ist als ein lichter Abstand zwischen Wandabschnitten des Gehäuses, zwischen denen der Vorspannbereich des Elementes liegt. Wird das Element in das Gehäuse eingebracht, so wird das Element zwischen den Wandabschnitten des Gehäuses gestaucht, wodurch die Ausbildung eines Vorspannbereichs des Elementes erreicht wird.

Gemäß einer weiteren vorteilhaften Weiterbildung der Einrichtung wird vorgeschlagen, daß das Element im vorspannungsfreien Bereich überwiegend eine Höhe aufweist, die höchstens einem lichten Abstand zwischen Wandabschnitten des Gehäuses, zwischen denen der im wesentlichen vorspannungsfreie Bereich des Elementes liegt, entspricht. Durch diese Ausgestaltung bleibt wenigstens ein Bereich des Elementes nach einer Montage im Gehäuse im wesentlichen vorspannungsfrei.

Bei einer weiteren vorteilhaften Ausgestaltung der Einrichtung weist das Element in dem im wesentlichen vorspannungsfreien Bereich wenigstens eine Erhebung auf, so daß das Element mit Erhebung in dem, im wesentlichen vorspannungsfreien Bereich, eine Höhe hat, die größer sein kann als der lichte Abstand zwischen den Wandabschnitten. Durch diese Ausgestaltung wird erreicht, daß die wenigstens eine Erhebung vorgespannt wird, ohne daß es zu einer Vorspannung des im wesentlichen vorspannungsfreien Bereichs selbst kommt. Bei einer Verformung des Elementes in eine Richtung entsteht auf der entgegengesetzten Seite des Elementes kein freier Spalt zwischen dem Element und dem benachbarten Wandabschnitt.

Eine konstruktiv günstige Ausgestaltung der Einrichtung wird dadurch erreicht, daß der Vorspannbereich den im wesentlichen vorspannungsfreien Bereich wenigstens teilweise, insbesondere umlaufend, umgibt. Hierdurch wird auch eine gleichmäßige Einleitung der Kräfte in das Element erreicht. Eine gleichmäßige Einleitung der Kräfte wird weiter verbessert, wenn der Vorspannungsbereich im wesentlichen koaxial zu dem vorspannungsfreien Bereich ausgebildet ist.

Gemäß einer weiteren vorteilhaften Ausgestaltung wird vorgeschlagen, daß das Element im wesentlichen plattenförmig, insbesondere scheibenförmig, ausgebildet ist. Bei einer scheibenförmigen Ausgestaltung des Elementes wird vorgeschlagen, daß der im wesentlichen vorspannungsfreie Bereich im wesentlichen im Zentrum des Elementes ausgebildet ist.

Zweckmäßig ist es, wenn der Vorsprung eine Außenkontur aufweist, die im wesentlichen einer Innenkontur der Nut entspricht. Hierdurch wird eine im wesentlichen unverrückbare Festlegung des Elementes innerhalb des Gehäuses erreicht.

Zur Vereinfachung der Herstellung der Einrichtung wird vorgeschlagen, daß der Vorsprung durch eine im Gehäuse ausgebildete Sicke hergestellt wird.

Das Gehäuse ist vorzugsweise durch eine erste und eine zweite Gehäuseschale gebildet. Die erste und die zweite Gehäuseschale sind insbesondere napfförmig ausgebildet. Zur sicheren Verbindung der Gehäuseschalen wird vorgeschlagen, daß die Gehäuseschalen durch Bördelung entlang eines Randes miteinander verbunden sind. Bei einer weiteren vorteilhaften Ausgestaltung der Einrichtung wird vorgeschlagen, daß das erste Verbindungsteil und das zweite Verbindungsteil fluchtend zueinander angeordnet sind. Hierdurch wird insbesondere die Montage der Einrichtung an den Bauteilen vereinfacht. Zweckmäßig kann auch eine exzentrische Anordnung des ersten und des zweiten Verbindungsteils sein. Die Lage des ersten und des zweiten Verbindungsteils zueinander kann an den Verwendungszweck der Einrichtung angepaßt werden.

Insbesondere bei einer plattenförmigen Ausgestaltung des elastischen Elementes wird vorgeschlagen, daß das erste Verbindungsteil und das zweite Verbindungsteil im wesentlichen senkrecht zum Element angeordnet sind.

Zur sicheren Verbindung des Elementes mit dem ersten Verbindungsteil wird vorgeschlagen, daß das Verbindungsteil fest im Element verankert ist.

Nach einem weiteren vorteilhaften Gedanken wird vorgeschlagen, daß das Element aus einem zelligen Polyurethan-Elastomer besteht. Ein solches Element hat von sich aus einen stark progressiven Federkennlinienverlauf. Das zellige Polyurethan-Elastomer erlaubt auch, bei seiner Verarbeitung das Verbindungsteil festhaftend zu umschäumen.

Weitere Einzelheiten und Vorteile der Erfindung werden anhand der in der Zeichnung dargestellten Ausführungsbeispiele erläutert. Es zeigen:
- Fig. 1: schematisch und in einer Explosionsdarstellung ein erstes Ausführungsbeispiel einer Einrichtung,
- Fig. 2: die Einrichtung nach Fig. 1 im montierten Zustand,
- Fig. 3: ein zweites Ausführungsbeispiel einer Einrichtung.

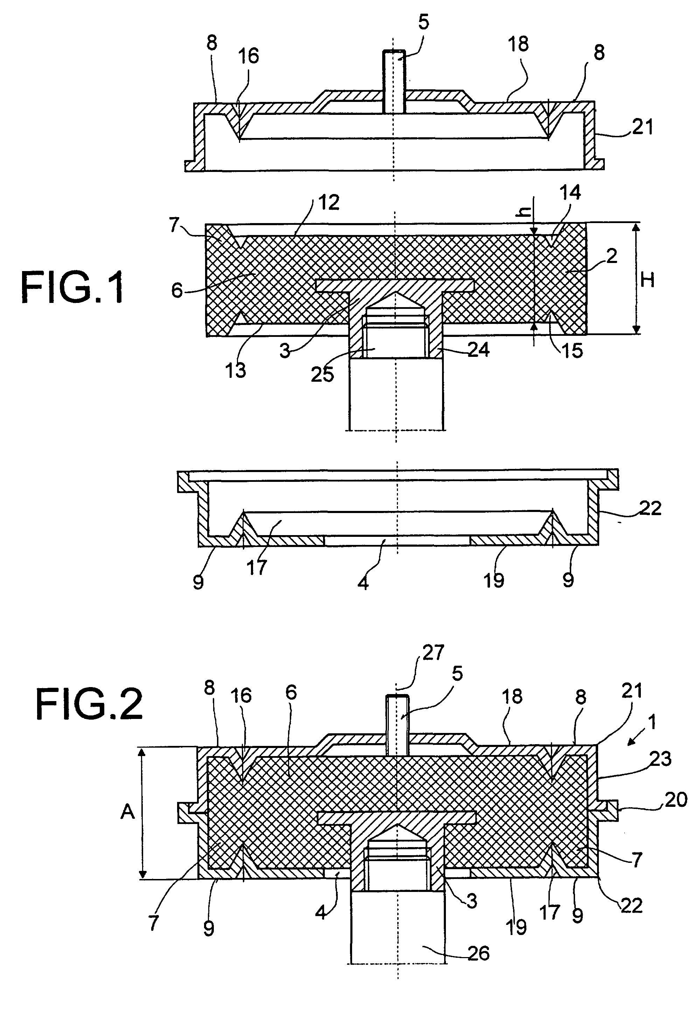

Die Einrichtung zur elastischen Verbindung wenigstens zweier Bauteile, insbesondere eines Stoßdämpfers mit einer Struktur eines Fahrzeugs, weist ein elastisches Element 2 auf. Das elastische Element 2 besteht aus einem elastomeren Werkstoff, insbesondere aus einem zelligen Polyurethan-Elastomer. In dem dargestellten Ausführungsbeispiel ist das Element 2 im wesentlichen scheibenförmig ausgebildet. Im Zentrum des Elementes 2 ist ein erstes Verbindungsteil 3 angeordnet, das in dem elastischen Element 2 fest eingebettet ist. Das Verbindungsteil 3 weist einen sich im wesentlichen in axialer Richtung erstreckenden Abschnitt 24 auf, der mit einem Innengewinde 25 ausgebildet ist. Das Innengewinde 25 dient zur Verbindung beispielsweise mit einer Kolbenstange 26, wie dies in der Fig. 2 dargestellt ist, die ein entsprechendes Außengewinde aufweist.

Das in der Fig. 1 dargestellte elastische Element 2 weist einen Vorspannbereich 7 auf, der im wesentlichen umlaufend ausgebildet ist. In dem Ausführungsbeispiel ist der Vorspannbereich 7 ringförmig ausgebildet. Der Vorspannbereich 7 umgibt einen im wesentlichen vorspannungsfreien Bereich 6. In dem im wesentlichen vorspannungsfreien Bereich 6 ist das erste Verbindungsteil 3 angeordnet. Das elastische Element 2 weist zwei Stirnflächen 12, 13 auf. In jeder Stirnfläche 12, 13 ist eine umlaufende Nut 14 bzw. 15 ausgebildet. Die Nut 14 bzw. 15 liegt zwischen dem Vorspannbereich 7 und dem im wesentlichen vorspannungsfreien Bereich 6.

Das Element 2 ist in einem Gehäuse 1 anordenbar. Das Gehäuse 1 ist durch eine erste und eine zweite Gehäuseschale 21, 22 gebildet. Jede Gehäuseschale 21, 22 ist in dem dargestellten Ausführungsbeispiel napfförmig ausgebildet. Die Verbindung der ersten und der zweiten Gehäuseschale 21, 22 erfolgt durch eine Bördelung 20 entlang eines Randes 23 der Gehäuseschalen 21, 22, wie dies insbesondere aus der Fig. 2 ersichtlich ist. In der Gehäuseschale 22 ist eine Gehäuseöffnung 4 ausgebildet, durch die sich das erste Verbindungsteil 3 wenigstens teilweise hindurch erstreckt. Mit der Gehäuseschale 21 ist ein zweites Verbindungsteil 5 verbunden. Bei dem zweiten Verbindungsteil 5 handelt es sich beispielsweise um einen Gewindebolzen. Das erste Verbindungsteil 3 und das zweite Verbindungsteil 5 sind fluchtend zueinander angeordnet. Sie erstrecken sich im wesentlichen senkrecht vom Element 2 weg.

Die erste und die zweite Gehäuseschale 21, 22 weist jeweils einen zum Element 2 hin gerichteten Vorsprung 16, 17 auf. Jeder Vorsprung 16, 17 ist umlaufend ausgebildet. Jeder Vorsprung 16, 17 weist eine Außenkontur auf, die im wesentlichen eine Innenkontur der Nut 14 bzw. 15 entspricht. Im montierten Zustand ragt der Vorsprung 16 in die Nut 14 und der Vorsprung 17 in die Nut 15 des Elementes hinein.

Fig. 2 zeigt die in der Fig. 1 dargestellten Bauteile der Einrichtung in fertig montiertem Zustand. Wie aus der Fig. 2 ersichtlich ist, ist die erste und die zweite Gehäuseschale 21, 22 durch Bördelung 20 entlang eines Randes 23 miteinander verbunden. Das erste Verbindungsteil 3 erstreckt sich durch die Gehäuseöffnung 4. Das erste Verbindungsteil 3 ist mit einer Kolbenstange 26 eines Stoßdämpfers verbunden.

Der Vorspannbereich 7 des Elementes 2 weist im vorspannungsfreien Zustand eine Höhe H auf. Die Höhe H ist größer als ein lichter Abstand A zwischen Wandabschnitten 8, 9 des zusammengefügten Gehäuses 1, zwischen denen der Vorspannbereich 7 des Elementes 2 liegt.

In dem im wesentlichen vorspannungsfreien Bereich 6 weist das Element 2 überwiegend eine Höhe h auf, die höchstens einem lichten Abstand A zwischen den Wandabschnitten 18, 19 des Gehäuses 1, zwischen denen der im wesentlichen vorspannungsfreie Bereich 6 des Elementes 2 liegt, entspricht.

Bei der Montage der Einrichtung wird das elastische Element 2 zwischen der ersten und der zweiten Gehäuseschale 21, 22 gelegt. Beide Gehäuseschalen 21, 22 werden dann unter Druck zusammengefügt bis sie auf Anschlag aneinander liegen, um dann durch Bördelung entlang des äußeren Randes 23 fest miteinander verbunden zu werden. Bei diesem Vorgang wird das elastische Element im Vorspannbereich 7 gestaucht, dadurch sitzt das elastische Element 2 fest im Gehäuse 1. Der Vorspannbereich 7 weist eine vorgegebene Vorspannung auf. Der Bereich 6 ist im wesentlichen vorspannungsfrei.

Bei einer durch die Bewegung der Kolbenstange 26 im wesentlichen entlang der Achse 27 bewirkten Auf- und Abbewegung des ersten Verbindungsteils 3 wird der Bereich 6 des elastischen Elementes 2 gestaucht und hat die gewünschte anfängliche Weichheit. Aufgrund der geeigneten Wahl des elastomeren Werkstoffes des elastischen Elementes 2 erfolgt eine gewünschte progressive Verhärtung des elastischen Elementes 2, die bei erhöhter Belastung des Elementes 2 eintritt.

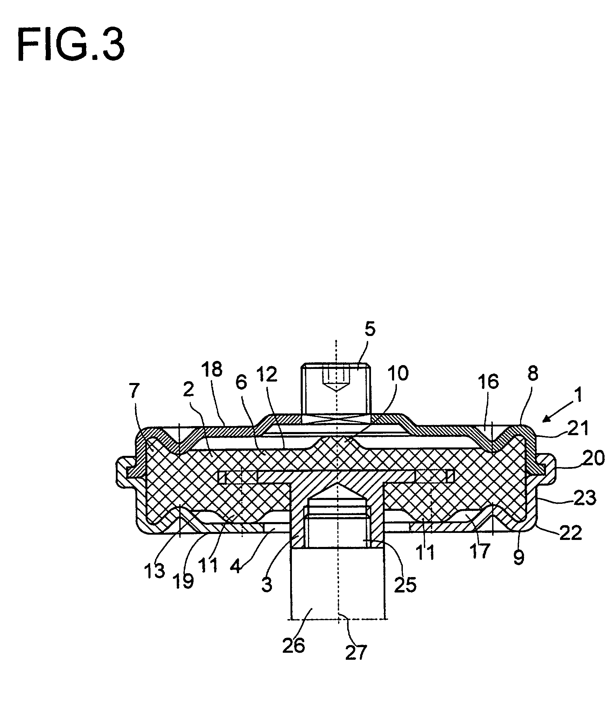

Fig. 3 zeigt ein zweites Ausführungsbeispiel einer Einrichtung zur elastischen Verbindung wenigstens zweier Bauteile, insbesondere eines Stoßdämpfers mit einer Struktur eines Fahrzeugs. Der prinzipielle Aufbau des Gehäuses 1 der Einrichtung stimmt im wesentlichen mit dem Aufbau des in den Figuren 1 und 2 dargestellten ersten Ausführungsbeispiels der Einrichtung überein. Insoweit wird auf die Beschreibung der Figuren 1 und 2 verwiesen.

Das in der Fig. 3 dargestellte Ausführungsbeispiel einer Einrichtung unterscheidet sich von dem in der Fig. 1 bzw. 2 dargestellten Ausführungsbeispiel durch die Ausgestaltung des elastischen Elementes 2. Das Element 2 weist in dem vorspannungsfreien Bereich 6 Erhebungen 10, 11 auf. Das Element 2 mit Erhebungen 10, 11 weist eine Höhe auf, die im wesentlichen dem lichten Abstand zwischen den Wandabschnitten 18, 19 des Gehäuses 1 entspricht. Die Erhebung 10 ist an der Stirnfläche 12 und im wesentlichen im Zentrum des elastischen Elementes 2 ausgebildet. Die Erhebung 10 hat einen im wesentlichen trapezförmigen Querschnitt. Die Erhebung 10 ist zur Wandung der Gehäuseschale 21 hin gerichtet. An der Stirnfläche 13 des elastischen Elementes 2 ist eine umlaufende Erhebung 11 ausgebildet. Die Erhebung 11 liegt an dem Wandabschnitt 19 der Gehäuseschale 22 an. Statt einer umlaufenden Erhebung 11 können auch mehrere Erhebungen vorgesehen sein, die auf einem gedachten Kreisumfang, der im wesentlichen konzentrisch zur Achse 21 ist, liegen. Bei einer Auf- und Abbewegung der Kolbenstange 26 eines Stoßdämpfers wird zunächst nur die Erhebung 11 bzw. 10 gestaucht, bevor es bei weiterer Bewegung zu einer Stauchung des Elementes 2 selbst kommt. Für die Stauchung der Erhebungen 10, 11 wird weniger Kraft benötigt als für Stauchung des Elementes 2 selbst. Die elastische Verbindung zweier Teile mittels der Einrichtung ist dadurch zunächst noch weicher.

## Patentansprüche

1. Einrichtung zur elastischen Verbindung wenigstens zweier Bauteile, insbesondere eines Stoßdämpfers mit einer Struktur eines Fahrzeugs, mit einem in einem Gehäuse (1) angeordneten elastischen Element (2), enthaltend
ein erstes Verbindungsteil (3), das mit dem Element (2) verbunden und im wesentlichen koaxial zu einer Gehäuseöffnung (4) angeordnet ist; ein zweites Verbindungsteil (5), das mit dem Gehäuse (1) verbunden ist; wenigstens einen mindestens in der Nähe des ersten Verbindungsteils (3) liegenden vorspannungsfreien Bereich (6) des Elementes (2), der gegenüber wenigstens einem weiteren Bereich, einem Vorspannbereich (7), des Elementes (2) keine oder eine wesentlich geringere Vorspannung aufweist, **gekennzeichnet durch**
in wenigstens einer Stirnfläche (12, 13) des Elements (2) wenigstens eine zwischen dem Vorspannbereich (7) und dem vorspannungsfreien Bereich (6) liegende Nut (14, 15), in die sich wenigstens ein mit dem Gehäuse (2) verbundener Vorsprung (16,17) hineinerstreckt.

2. Einrichtung nach Anspruch 1, **dadurch gekennzeichnet, daß** der Vorsprung (16, 17) eine Außenkontur aufweist, die im wesentlichen einer Innenkontur der Nut (14, 15) entspricht.

3. Einrichtung nach Anspruch 1 oder 2, **dadurch gekennzeichnet, daß** der Vorsprung (16, 17) durch eine Sicke im Gehäuse (2) gebildet ist.

4. Einrichtung nach einem der Ansprüche 1 bis 3, **dadurch gekennzeichnet, daß** das Element (2) im vorspannungsfreien Zustand des Vorspannbereichs (7) eine Höhe (H) aufweist, die größer ist als ein lichter Abstand (A) zwischen Wandabschnitten (8, 9) des Gehäuses (1), zwischen denen der Vorspannbereich (7) des Elementes (2) liegt.

5. Einrichtung nach einem der Ansprüche 1 bis 4, **dadurch gekennzeichnet, daß** das Element (2) im vorspannungsfreien Bereich (6) überwiegend eine Höhe (h) aufweist, die höchstens einem lichten Abstand (A) zwischen Wandabschnitten (18, 19) des Gehäuses (1), zwischen denen der vorspannungsfreie Bereich (6) des Elementes (2) liegt, entspricht.

6. Einrichtung nach einem der Ansprüche 1 bis 4, **dadurch gekennzeichnet, daß** das Element (2) im vorspannungsfreien Bereich (6) wenigstens eine Erhebung (10, 11) aufweist, so daß das Element (2) mit Erhebung (10, 11) im vorspannungsfreien Bereich (6) eine Höhe aufweist, die größer sein kann als der lichte Abstand (A).

7. Einrichtung nach einem der Ansprüche 1 bis 6, **dadurch gekennzeichnet, daß** der Vorspannbereich (7) den vorspannungsfreien Bereich (6) wenigstens teilweise, insbesondere umlaufend, umgibt.

8. Einrichtung nach Anspruch 7, **dadurch gekennzeichnet, daß** der Vorspannbereich (7) im wesentlichen koaxial zum vorspannungsfreien Bereich (6) ausgebildet ist.

9. Einrichtung nach einem der Ansprüche 1 bis 8, **dadurch gekennzeichnet, daß** das Element (2) im wesentlichen plattenförmig, insbesondere scheibenförmig, ausgebildet ist.

10. Einrichtung nach Anspruch 9, **dadurch gekennzeichnet, daß** der vorspannungsfreie Bereich (6) im wesentlichen im Zentrum des Elementes (2) ausgebildet ist.

11. Einrichtung nach einem der Ansprüche 1 bis 10, **dadurch gekennzeichnet, daß** das Gehäuse (1) durch eine erste und eine zweite Gehäuseschale (21, 22) gebildet ist.

12. Einrichtung nach Anspruch 11, **dadurch gekennzeichnet, daß** die erste und die zweite Gehäuseschale (21, 22) napfförmig ausgebildet sind.

13. Einrichtung nach Anspruch 11 oder 12, **dadurch gekennzeichnet, daß** die Gehäuseschalen (21, 22) durch Bördelung (20) entlang eines Randes (23) miteinander verbunden sind.

14. Einrichtung nach einem der Ansprüche 1 bis 13, **dadurch gekennzeichnet, daß** das erste Verbindungsteil (3) und das zweite Verbindungsteil (5) fluchtend zueinander angeordnet sind.

15. Einrichtung nach einem der Ansprüche 1 bis 14, **dadurch gekennzeichnet, daß** das erste Verbindungsteil (3) und das zweite Verbindungsteil (5) im wesentlichen senkrecht zum Element (2) angeordnet sind.

16. Einrichtung nach einem der Ansprüche 1 bis 15, **dadurch gekennzeichnet, daß** das erste Verbindungsteil (3) festsitzend im Element (2) eingebettet ist.

17. Einrichtung nach einem der Ansprüche 1 bis 16, **dadurch gekennzeichnet, daß** das Element (2) aus einem zelligen Polyurethan-Elastomer besteht.

## Claims

1. A means for the flexible connection of at least two components, in particular of a shock absorber to a structure of a vehicle, having a flexible element (2) arranged in a housing (1), comprising
a first connecting part (3), which is connected to the element (2) and is arranged substantially coaxially with respect to a housing opening (4);
a second connecting part (5), which is connected to the housing (1);
at least one prestressing-free region (6) of the element (2), lying at least in the vicinity of the first connecting part (3), which region has no or significantly less prestressing than at least one further region, a prestressing region (7), of the element (2) which has
in at least one end face (12, 13) of the element (2) at least one groove (14, 15) which lies between the prestressing region (7) and the prestressing-free region (6) and into which there extends at least one projection (16, 17) which is connected to the housing (1).

2. A means as claimed in claim 1, wherein the projection (16, 17) has an outer contour which corresponds substantially to an inner contour of the groove (14, 15).

3. A means as claimed in claim 1 or 2, wherein the projection (16, 17) is formed by a bead in the housing (1).

4. A means as claimed in one of claims 1 to 3, wherein the element (2) has in the prestressing-free state of the prestressing region (7) a height (H) which is greater than a clear distance (A) between wall portions (8, 9) of the housing (1) between which the prestressing region (7) of the element (2) lies.

5. A means as claimed in one of claims 1 to 4, wherein the element (2) has in the prestressing-free region (6) predominantly a height (h) which corresponds at most to a clear distance (A) between wall portions (18, 19) of the housing (1) between which the prestressing-free region (6) of the element (2) lies.

6. A means as claimed in one of claims 1 to 4, wherein the element (2) has in the prestressing-free region (6) at least one elevation (10, 11), so that the element (2) with the elevation (10, 11) has in the prestressing-free region (6) a height which may be greater than the clear distance (A).

7. A means as claimed in one of claims 1 to 6, wherein the prestressing region (7) surrounds the prestressing-free region (6) at least partially, in particular peripherally.

8. A means as claimed in claim 7, wherein the prestressing region (7) is formed substantially coaxially with respect to the prestressing-free region (6).

9. A means as claimed in one of claims 1 to 8, wherein the element (2) is of a substantially plate-shaped, in particular disk-shaped, design.

10. A means as claimed in claim 9, wherein the prestressing-free region (6) is formed substantially in the center of the element (2).

11. A means as claimed in one of claims 1 to 10, wherein the housing (1) is formed by a first and a second housing shell (21, 22).

12. A means as claimed in claim 11, wherein the first and the second housing shells (21, 22) are of a cup-shaped design.

13. A means as claimed in claim 11 or 12, wherein the housing shells (21, 22) are connected to each other by flanging (20) along a border (23).

14. A means as claimed in one of claims 1 to 13, wherein the first connecting part (3) and the second connecting part (5) are arranged in line with each other.

15. A means as claimed in one of claims 1 to 14, wherein the first connecting part (3) and the second connecting part (5) are arranged substantially perpendicularly with respect to the element (2).

16. A means as claimed in one of claims 1 to 15, wherein the first connecting part (3) is firmly embedded in the element (2).

17. A means as claimed in one of claims 1 to 16, wherein the element (2) consists of a cellular polyurethane elastomer.

## Revendications

1. Dispositif pour la liaison élastique d'au moins deux composants, en particulier d'un amortisseur, à une structure d'un véhicule, comprenant un élément élastique (2) disposé dans un boîtier (1), contenant
une première pièce de liaison (3) qui est reliée à l'élément (2) et qui est disposée essentiellement coaxialement à une ouverture du boîtier (4) ;
une deuxième pièce de liaison (5) qui est reliée au boîtier (1) ;
au moins une région (6) de l'élément (2) exempte de précontrainte et située au moins à proximité de la première pièce de liaison (3), laquelle ne présente, par rapport à au moins une autre région, une région de précontrainte (7), de l'élément (2), aucune précontrainte ou alors une précontrainte considérablement plus faible,
**caractérisé par**
au moins une rainure (14, 15) se trouvant entre la région de précontrainte (7) et la région exempte de précontrainte (6), dans au moins une face frontale (12, 13) de l'élément (2), dans laquelle s'étend au moins une saillie (16, 17) reliée au boîtier (1).

2. Dispositif selon la revendication 1, **caractérisé en ce que** la saillie (16, 17) présente un contour extérieur qui correspond essentiellement à un contour interne de la rainure (14, 15).

3. Dispositif selon la revendication 1 ou 2, **caractérisé en ce que** la saillie (16, 17) est formée par une moulure dans le boîtier (1).

4. Dispositif selon l'une quelconque des revendications 1 à 3, **caractérisé en ce que** l'élément (2) présente, dans l'état exempt de précontrainte de la région de précontrainte (7), une hauteur (H) qui est plus grande qu'une distance intérieure (A) entre les portions de paroi (8, 9) du boîtier (1) entre lesquelles se trouve la région de précontrainte (7) de l'élément (2).

5. Dispositif selon l'une quelconque des revendications 1 à 4, **caractérisé en ce que** l'élément (2) présente, dans la région exempte de précontrainte (6) essentiellement une hauteur (h) qui correspond au maximum à une distance intérieure (A) entre les portions de paroi (18, 19) du boîtier (1) entre lesquelles se trouve la région exempte de précontrainte (6) de l'élément (2).

6. Dispositif selon l'une quelconque des revendications 1 à 4, **caractérisé en ce que** l'élément (2) présente, dans la région exempte de précontrainte (6), au moins un rehaussement (10, 11) de sorte que l'élément (2) avec le rehaussement (10, 11) présente, dans la région exempte de précontrainte (6), une hauteur qui peut être supérieure à la distance intérieure (A).

7. Dispositif selon l'une quelconque des revendications 1 à 6, **caractérisé en ce que** la région de précontrainte (7) entoure la région exempte de précontrainte (6) au moins en partie, notamment sur sa périphérie.

8. Dispositif selon la revendication 7, **caractérisé en ce que** la région de précontrainte (7) est essentiellement coaxiale à la région exempte de précontrainte (6).

9. Dispositif selon l'une quelconque des revendications 1 à 8, **caractérisé en ce que** l'élément (2) est essentiellement réalisé en forme de plaque, notamment en forme de disque.

10. Dispositif selon la revendication 9, **caractérisé en ce que** la région exempte de précontrainte (6) est essentiellement réalisée au centre de l'élément (2).

11. Dispositif selon l'une quelconque des revendications 1 à 10, **caractérisé en ce que** le boîtier (1) est formé par une première et une deuxième coque de boîtier (21, 22).

12. Dispositif selon la revendication 11, **caractérisé en ce que** la première et la deuxième coque de boîtier (21, 22) sont réalisées en forme de cuvette.

13. Dispositif selon la revendication 11 ou 12, **caractérisé en ce que** les coques de boîtier (21, 22) sont reliées l'une à l'autre par rabattage (20) le long d'un bord (23).

14. Dispositif selon l'une quelconque des revendications 1 à 13, **caractérisé en ce que** la première pièce de liaison (3) et la deuxième pièce de liaison (5) sont disposées en affleurement l'une avec l'autre.

15. Dispositif selon l'une quelconque des revendications 1 à 14, **caractérisé en ce que** la pièce de liaison (3) et la deuxième pièce de liaison (5) sont disposées essentiellement perpendiculairement à l'élément (2).

16. Dispositif selon l'une quelconque des revendications 1 à 15, **caractérisé en ce que** la pièce de liaison (3) est encastrée de manière fixe dans l'élément (2).

17. Dispositif selon l'une quelconque des revendications 1 à 16, **caractérisé en ce que** l'élément (2) se compose d'un élastomère polyuréthanne cellulaire.
